# EUROPÄISCHE PATENTSCHRIFT

(11) **EP 3 868 192 B1**
(45) Veröffentlichungstag und Bekanntmachung des Hinweises auf die Patenterteilung: **23.08.2023**
(21) Anmeldenummer: 20205617.2
(22) Anmeldetag: 04.11.2020
(51) Int. Cl.: A01B 76/00, A01B 69/00, G06F 3/01, G06F 3/03, G06F 3/04886, G06F 3/16

(54) **LANDWIRTSCHAFTLICHE ARBEITSMASCHINE**
AGRICULTURAL MACHINE
MACHINE DE TRAVAIL AGRICOLE

(30) Priorität: 18.02.2020 DE 102020104181
(43) Veröffentlichungstag der Anmeldung: 25.08.2021
(73) Patentinhaber: CLAAS E-Systems GmbH, 49201 Dissen (DE)
(72) Erfinder: Reinecke, Max, 33775 Versmold (DE)
(74) Vertreter: CLAAS Gruppe

(56) Entgegenhaltungen:
- CN-A- 1 499 344
- DE-A1-102004 032 642
- DE-A1-102017 219 154
- US-A1- 2018 277 067

## Beschreibung

Die vorliegende Erfindung betrifft eine landwirtschaftliche Arbeitsmaschine gemäß dem Oberbegriff des Anspruches 1.

Eine landwirtschaftliche Arbeitsmaschine mit zumindest einer zu steuernden und/oder zu regelnden Vorrichtung umfasst mindestens eine Steuervorrichtung zur Ansteuerung der zumindest einen Vorrichtung. Die mindestens eine Steuervorrichtung ist mit wenigstens einer zumindest ein Bedienelement aufweisenden Benutzerschnittstelle signaltechnisch verbunden. Mittels der wenigstens einen Benutzerschnittstelle sind Steuerbefehle zur Ansteuerung der zumindest einen Vorrichtung an die Steuervorrichtung übertragbar. Dabei ist die wenigstens eine Benutzerschnittstelle dazu eingerichtet, dem zumindest einen Bedienelement eine Belegung mit zumindest einer Funktion zuzuweisen, die einen oder mehrere Steuerbefehle umfasst. Durch ein Sprachsteuerungssystem ist die Steuervorrichtung zum Empfang und zur Auswertung von Sprachbefehlen einer Bedienperson der Arbeitsmaschine eingerichtet, mittels derer der mit dem Sprachbefehl korrespondierende Steuerbefehl ausgelöst wird, der dem zumindest einen Bedienelement zugewiesen ist.

Eine landwirtschaftliche Arbeitsmaschine der eingangs genannten Art ist aus der DE 10 2004 032 642 A1 bekannt. Die aus der DE 10 2004 032 642 A1 bekannte Arbeitsmaschine weist für die Durchführung arbeitsspezifischer Abläufe eine elektronische Steuerung mit einem Spracherkennungssystem auf. Mittels eines Sprachbefehls wird eine Arbeitsfunktion, die einem Bedienelement einer Benutzerschnittstelle zugewiesen ist, ausgeführt, indem der Sprachbefehl an die Stelle der physischen Betätigung des Bedienelementes tritt. Die Sprachsteuerung ermöglicht es der Bedienperson, die zu steuernde und/oder zu regelnde Vorrichtung zu betätigen, ohne auf eine Anzeige blicken oder das Bedienelement aktiv betätigen zu müssen. Ein Nachteil der Sprachsteuerung besteht im zeitlichen Versatz zwischen der Spracheingabe des Sprachbefehls und dessen tatsächlicher Ausführung durch die Vorrichtung, bedingt durch die Interpretation, Auswertung und Umsetzung in einen korrespondierenden Steuerbefehl durch das Spracherkennungssystem. Des Weiteren sieht das Spracherkennungssystem die Erkennung von falschen Spracheingaben bzw. Sprachbefehlen vor, welche durch das Vergleichen von in der elektronischen Steuerung hinterlegten spezifischen Sprachbefehlen mit den durch das Spracherkennungssystem erkannten Sprachbefehlen erfolgt.

Ausgehend vom vorstehend genannten Stand der Technik liegt der Erfindung die Aufgabe zu Grunde, eine landwirtschaftliche Arbeitsmaschine der eingangs genannten Art derart auszugestalten und weiterzubilden, dass diese sich durch eine flexiblere Zuweisung von Sprachbefehlen und eine verbesserte Bedienbarkeit auszeichnet.

Diese Aufgabe wird erfindungsgemäß durch eine landwirtschaftliche Arbeitsmaschine mit den Merkmalen des Anspruchs 1 gelöst. Vorteilhafte Ausgestaltungen und Weiterbildungen sind Gegenstand der Unteransprüche.

Gemäß dem Anspruch 1 wird eine landwirtschaftliche Arbeitsmaschine mit zumindest einer zu steuernden und/oder zu regelnden Vorrichtung, umfassend mindestens eine Steuervorrichtung zur Ansteuerung der zumindest einen Vorrichtung sowie wenigstens eine zumindest ein Bedienelement aufweisende, mit der Steuervorrichtung signaltechnisch verbundene Benutzerschnittstelle, mittels der Steuerbefehle zur Ansteuerung der zumindest einen Vorrichtung an die Steuervorrichtung übertragbar sind, wobei die wenigstens eine Benutzerschnittstelle dazu eingerichtet ist, dem zumindest einen Bedienelement eine Belegung mit zumindest Funktion, die einen oder mehrere Steuerbefehle umfasst, zuzuweisen, und dass die Steuervorrichtung durch ein Sprachsteuerungssystem zum Empfang und zur Auswertung von Sprachbefehlen einer Bedienperson der Arbeitsmaschine eingerichtet ist. Erfindungsgemäß ist vorgesehen, dass die mindestens eine Steuervorrichtung dazu eingerichtet ist, das zumindest eine Bedienelement der wenigstens einen Benutzerschnittstelle sprachgesteuert mit zumindest einer Funktion und/oder zumindest einem Funktionsset zu belegen, wobei zur Bestimmung des zu belegenden Bedienelementes zumindest eine Sensoreinrichtung vorgesehen ist, die dazu eingerichtet ist, das zu belegende Bedienelement durch eine Gestenerkennung und/oder eine Detektion der Blickrichtung der Bedienperson zu bestimmen. Ein Vorteil der Kombination von sprachgesteuerter Belegung des zumindest einen Bedienelementes der wenigstens einen Benutzerschnittstelle und einer Auslösung der zumindest einen Funktion und/oder des zumindest einen Funktionssets mittels physischer Betätigung des zumindest einen Bedienelementes besteht darin, dass mit der physischen Betätigung im Vergleich zu einer direkten Auslösung per Sprachbefehl eine zeitlich wesentlich präzisere Auslösung möglich ist. Grundsätzlich führt die Bestimmung oder Erkennung des zu belegenden Bedienelementes bereits bei nur einem Bedienelement zu einer Vereinfachung, da in Abhängigkeit von der Art der Bestimmung, sei es durch eine Gestenerkennung und/oder eine Detektion der Blickrichtung der Bedienperson, auf eine direkte Berührung des zu belegenden Bedienelementes zu dessen Auswahl verzichtet werden kann. Das Bestimmen oder Erkennen des zu belegenden Bedienelementes ist insbesondere dann vorteilhaft, wenn mehr als ein Bedienelement vorhanden ist, welches mit einer Funktion und/oder einem Funktionsset belegbar ist. Insbesondere wird hierdurch eine intuitive Auswahl des zu belegenden Bedienelementes durch die Bedienperson ermöglicht. Ein weiterer vorteilhafter Aspekt resultiert daraus, dass dem ausgewählten zu belegenden Bedienelement eine Funktion und/oder ein Funktionssatz durch den Sprachbefehl zugewiesen wird, wobei die Funktion und/oder der Funktionssatz durch die Bedienperson individuell vorgebbar ist bzw. sind.

Insbesondere kann die Bestimmung des zu belegenden Bedienelementes durch die Steuervorrichtung vor oder während einer Eingabe des Sprachbefehls erfolgen. Hierzu kann der von der Bedienperson eingegebene Sprachbefehl für die Dauer der Bestimmung des zu belegenden Bedienelementes von der Steuervorrichtung in einem Speicher zwischengespeichert werden.

Der Begriff Bedienelement ist weit gefasst zu verstehen und umfasst jedwede Einrichtung an der wenigstens einen Benutzerschnittstelle, die durch eine physische Betätigung zur Ausführung einer Funktion und/oder eines Funktionssets eingerichtet ist. Eine physische Betätigung umfasst beispielsweise Drücken, Drehen, Berühren, Wischbewegungen, Schwenken und/oder Kippen des Bedienelementes. Dabei sind auch verschiedene Arten von physischen Betätigungen in nur einem Bedienelement darstellbar. Die Betätigung des Bedienelementes kann entsprechend seiner Ausgestaltung abgestuft oder stufenlos erfolgen. Darüber hinaus kann das Bedienelement eine Visualisierungsvorrichtung umfassen, beispielsweise eine Anzeige und/oder ein oder mehrere Leuchtmittel. Das Bedienelement bietet zumindest eine Eingabemöglichkeit, um eine zugewiesene Funktion oder ein zugewiesenes Funktionsset auszuführen. Ein Funktionsset umfasst mehrere Einzelfunktionen, die einer mit mehreren Bedienelementen oder einem Bedienelement, welches mehrere Betätigungsarten zulässt, ausgeführten Benutzerschnittstelle zugewiesen werden.

Unter dem Begriff Benutzerschnittstelle ist eine mit zumindest einem Bedienelement ausgeführte Vorrichtung zu verstehen, die mit der Steuervorrichtung signaltechnisch verbunden ist und der Eingabe und/oder Ausgabe dient. Eine Benutzerschnittstelle kann beispielsweise ein Joystick sein, der über einen Griff und einen oder mehrere Knöpfe und/oder Schubregler verfügen kann, die Bedienelement darstellen. Eine Benutzerschnittstelle kann beispielsweise auch ein Touchscreen sein. Der Begriff Funktionsset kann eine koordinierte Abfolge von einzelnen Funktionen umfassen, die bei Betätigung des Bedienelementes ausgeführt werden sollen.

Das Sprachsteuerungssystem umfasst zumindest ein Mikrofon zur Aufnahme von durch die Bedienperson artikulierten Sprachbefehlen. Ergänzend kann eine akustische Wiedergabevorrichtung, beispielsweise ein Lautsprecher, als Teil des Sprachsteuerungssystemes vorgesehen sein. Letzteres ermöglicht einen interaktiven auditiven Dialog mit der Bedienperson.

Hierzu kann gemäß einer bevorzugten Ausführungsform vorgesehen sein, dass die zumindest eine Sensoreinrichtung zur Detektion einer Annäherung an das zumindest eine Bedienelement ausgeführt ist. Mittels der zumindest einen Sensoreinrichtung zur Detektion einer Annäherung kann die Gestenerkennung erfolgen. So kann die Gestenerkennung beispielsweise die Geste der Annäherung einer Hand oder eines Fingers der Bedienperson an das von der Bedienperson ausgewählte Bedienelement bestimmen bzw. erkennen. Die Anordnung der zumindest einen Sensoreinrichtung ist bevorzugt in unmittelbarer Nähe zu dem jeweiligen Bedienelement oder unmittelbar an dem Bedienelement vorgesehen. Dazu kann die zumindest eine Sensoreinrichtung als ein Näherungsschalter ausgeführt sein. Dies ermöglicht eine berührungslose Gestenerkennung, d.h. ein physischer Kontakt mit dem Bedienelement durch die Bedienperson ist nicht erforderlich.

Insbesondere kann die zumindest eine Sensoreinrichtung als kapazitiver, optischer Näherungsschalter und/oder als Ultraschall-Näherungsschalter ausgeführt sein.

Weiter bevorzugt kann vorgesehen sein, dass die zumindest eine Sensoreinrichtung zur Detektion der Berührung oder Betätigung des zumindest einen Bedienelementes eingerichtet ist. Hierzu kann die zumindest eine Sensoreinrichtung als kapazitiver Sensor ausgeführt sein, insbesondere als Drucksensor. Alternativ kann eine Veränderung der Lage oder eine Bewegung des Bedienelementes durch die zumindest eine Sensoreinrichtung erfasst werden. Aus der Veränderung der Lage oder der Bewegung des Bedienelementes wird auf die getroffene Auswahl des Bedienelementes durch die Bedienperson geschlossen, welchem per Sprachbefehl eine Funktion oder ein Funktionsset zugewiesen wird.

Alternativ oder zusätzlich kann gemäß einer bevorzugten Ausführungsform vorgesehen sein, dass die zumindest eine Sensoreinrichtung als eine optische Vorrichtung zur Bilderfassung ausgeführt ist. Mittels der zumindest einen als optische Vorrichtung ausgeführten Sensoreinrichtung lässt sich eine Blickrichtung und/oder eine Kopfposition und/oder eine Hand- oder Fingerposition der Bedienperson bestimmen. Die Kopfposition und/oder die Hand- oder Fingerposition lassen sich als Zeigerichtung oder Auswahlkriterium interpretieren, mit dem das zu belegende Bedienelement ausgewählt wird. Entsprechendes gilt für die Blickrichtung der Bedienperson, deren Auswertung auf die Auswahl des zu belegenden Bedienelementes schließen lässt.

Die optische Vorrichtung ist zur Erfassung einer Blickrichtung und/oder einer Zeigerichtung der in einer Kabine der Arbeitsmaschine befindlichen Bedienperson eingerichtet. Insbesondere ist die optische Vorrichtung als eine Kamera ausgeführt. Hierzu weist die Steuervorrichtung ein Bildverarbeitungssystem auf, das zur Verarbeitung der von der optischen Vorrichtung zur Bilderfassung bereitgestellten Signale eingerichtet ist.

Für eine verbesserte Zuordnung von erfasster Blickrichtung und/oder Zeigerichtung zu dem Bedienelement kann im Speicher der Steuervorrichtung ein virtuelles Abbild des Inneren der Kabine hinterlegt sein, insbesondere der Position und Anordnung des zumindest einen Bedienelementes. Durch Abgleich der erfassten Bilddaten, welche die Blickrichtung und/oder die Zeigerichtung der Bedienperson wiedergeben, mit der hinterlegten virtuellen Umgebung des Inneren der Kabine und der Anordnung des zumindest einen Bedienelementes lässt sich die Zuordnung der Blick- und/oder Zeigerichtung der Bedienperson zu dem von der Steuervorrichtung auszuwählenden Bedienelement präzisieren. Weiterhin lässt sich mittels der optischen Vorrichtung eine Aktualisierung der hinterlegten virtuellen Umgebung durchführen, wenn beispielsweise ein mobiles Datenverarbeitungsgerät temporär in der Kabine angeordnet und mit der Steuervorrichtung signaltechnisch verbunden wird. Damit lässt sich auch ein Bedienelement eines nur temporär angeordneten Datenverarbeitungsgerät auf erfindungsgemäße weise auswählen und mit einer Funktion und/oder einem Funktionsset belegen.

Insbesondere kann die zumindest eine zu steuernde und/oder zu regelnde Vorrichtung der Arbeitsmaschine ein Komfortgerät, ein Datenverarbeitungsgerät, ein an die Arbeitsmaschine adaptiertes Anbaugerät oder Arbeitsgerät sowie ein Arbeitsorgan sein. Als ein zu steuerndes und/oder zu regelndes Komfortgerät kommt beispielsweise ein Multimediagerät zur auditiven oder audiovisuellen Wiedergabe, eine Freisprecheinrichtung und/oder ein Klimagerät der landwirtschaftlichen Arbeitsmaschine in Frage. Eine zu steuernde und/oder zu regelnde Vorrichtung kann ein an die landwirtschaftliche Arbeitsmaschine adaptiertes Anbaugerät wie beispielsweise ein Bodenbearbeitungsgerät, ein Düngevorrichtung, eine Sävorrichtung, ein Vorsatzgerät oder ein von der Arbeitsmaschine gezogenes Arbeitsgerät wie eine Ballenpresse oder ein Güllefass sein. Die zu steuernde und/oder zu regelnde Vorrichtung kann, in Abhängigkeit von der Art der landwirtschaftlichen Arbeitsmaschine, Traktor, Schlepper oder selbstfahrende Erntemaschine, als Arbeitsorgan auch fester Bestandteil der landwirtschaftlichen Arbeitsmaschine sein, beispielsweise ein Fahrantrieb, eine Lenkvorrichtung, eine Hubwerk, eine Dreschvorrichtung, eine Häckselvorrichtung und dergleichen mehr. Darüber hinaus kann eine zu steuernde und/oder zu regelnde Vorrichtung ein zusätzliches Terminal und/oder eine zusätzliche Anzeigevorrichtung im Sinne einer Benutzerschnittstelle sein, die in der Kabine anbringbar oder angeordnet sind. Die zumindest eine zu steuernde und/oder zu regelnde Vorrichtung steht mit der Steuervorrichtung durch ein Kommunikationsmittel zum bidirektionalen Datenaustausch, insbesondere zur Übertragung von Steuerbefehlen, in Verbindung. Das Kommunikationsmittel kann als Bussystem, CAN-Bus oder ISO-Bus, als Funknetz oder kabelgebundenes Netzwerk, Bluetooth-Verbindung und dergleichen mehr ausgeführt sein.

Darüber hinaus ist es möglich, Anzeigen, Monitore oder Teile von Bildschirmen zu belegen, d.h. auszuwählen, welche Informationen, Daten und/oder Kamerabilder auf welcher Anzeige bzw. auf welchem Monitor und/oder in welchem Teilbereich der Anzeige oder des Monitors diese dargestellt werden sollen. Auch Terminals, welche Ein- und Ausgabeelemente miteinander kombinieren, können als Ganzes mit zumindest einer Funktion und/oder zumindest einem Funktionsset belegt werden.

Dabei kann die zumindest eine Funktion und/oder das zumindest eine Funktionsset, mit dem das zumindest eine Bedienelement belegt ist, unabhängig von einer unmittelbaren Betätigung des Bedienelementes durch ein äußeres Ereignis triggerbar sein. Das äußere Ereignis kann beispielsweise ein Telefonanruf, eine Alarmmeldung der Arbeitsmaschine beziehungsweise eines der Arbeitsorgane, die Betätigung des Straßenfahrschalters, ein Signal eines Routenplanungssystems oder dergleichen mehr sein, welche die zumindest eine Funktion und/oder das zumindest eine Funktionsset triggern bzw. auslösen.

Bevorzugt kann die wenigstens eine Benutzerschnittstelle zur Anzeige der zumindest einen Funktion und/oder des zumindest einen Funktionssets, mit dem das zumindest eine Bedienelement belegt ist, eingerichtet sein.

Vorteilhafterweise kann die Benutzerschnittstelle dazu eingerichtet sein, bei sprachgesteuerter Anforderung der Ausführung einer sicherheitskritischen Funktion den Empfang der sprachgesteuerten Anforderung zu bestätigen, die sprachgesteuerte Anforderung wiederzugeben und die Ausführung der sicherheitskritischen Funktion innerhalb eines definierten Zeitfensters durch Betätigung des Bedienelementes zuzulassen. Hierzu kann nach erfolgter Auswertung der sprachgesteuerten Anforderung respektive des Sprachbefehls durch das Spracherkennungssystem die Steuervorrichtung die Benutzerschnittstelle an steuern, um den ausgewerteten Sprachbefehl wiederzugeben.

Weiterhin kann zur Belegung eines spezifischen Bedienelementes der wenigstens einen Benutzerschnittstelle mit zumindest einer Funktion und/oder zumindest einem Funktionsset, dem jeweiligen Bedienelement ein spezifischer Aktivierungssprachbefehl zugeordnet sein. So lässt sich bei einer Vielzahl von Bedienelementen die Bestimmung durch die Steuervorrichtung der Auswahl weiter präzisieren.

Dabei kann der jeweilige spezifische Aktivierungssprachbefehl in der Steuervorrichtung hinterlegt oder mittels eines Sprachbefehls durch die Bedienperson vorgebbar sein. Letzteres bietet der Bedienperson die Möglichkeit, eine individualisierte Anpassung des Aktivierungssprachbefehls vorzunehmen.

Bevorzugt kann die wenigstens eine Benutzerschnittstelle zur Anzeige des Ergebnisses der Ausführung der durch die Betätigung des zumindest einen Bedienelements ausgeführten Funktion oder des Funktionssets eingerichtet sein.

Vorzugsweise kann das zumindest eine Bedienelement dazu eingerichtet sein, eine sensorische Rückmeldung als Reaktion auf einen Sprachbefehl zu generieren. Zwecks sensorischer Rückmeldung kann das zumindest eine Bedienelement beispielsweise vibrieren. Denkbar ist auch die Anordnung von farbigen Leuchtmitteln, die durch eine unterschiedliche Farbcodierung der Bedienperson eine Reaktion auf den Sprachbefehl anzeigen. Weiterhin ist es denkbar, dass durch eine Temperaturänderung in einem Bereich des Bedienelementes eine Reaktion auf den Sprachbefehl signalisiert wird. Dies lässt sich beispielsweise bei einer als Multifunktionsgriff ausgeführten Benutzerschnittstelle darstellen. Grundsätzlich kann das zumindest eine Bedienelement dazu eingerichtet sein. optisch, akustisch und/oder haptisch anzuzeigen, ob ein Sprachbefehl durch die Spracherkennung verstanden wurde.

Des Weiteren kann die wenigstens eine Benutzerschnittstelle zur Wiedergabe des von dem Spracherkennungssystem verstandenen Sprachbefehls eingerichtet sein. Die Wiedergabe kann akustisch und/oder optisch erfolgen. Durch die Wiederholung des vom Spracherkennungssystem verstandenen Sprachbefehls kann Fehlinterpretationen durch das Spracherkennungssystem und damit verbundenen Fehlbelegungen durch die Steuervorrichtung vorgebeugt werden.

Zudem ist es möglich, auf erfindungsgemäße Weise Anzeigen, Monitore oder Teile von Bildschirmen, die mit der Steuervorrichtung verbunden sind, zu belegen, d.h. auszuwählen, welche Informationen, beispielsweise Informationen, Messdaten, Kamerabilder und dergleichen, auf welcher Anzeigeeinheit dargestellt werden sollen. Auch Terminals, welche Ein- und Ausgabeelemente kombinieren können als Ganzes mit einem durch die Bedienperson angepassten Funktionsbereich belegt werden.

Die vorliegende Erfindung wird nachstehend anhand eines in den Zeichnungen dargestellten Ausführungsbeispieles näher erläutert.

Es zeigen:
- Fig. 1: exemplarisch eine schematische Darstellung einer landwirtschaftlichen Arbeitsmaschine;
- Fig. 2: exemplarisch eine schematische Darstellung einer Steuervorrichtung und mit dieser verbundener Benutzerschnittstellen; und
- Fig. 3: exemplarisch eine Ausführungsform eines Bedienelementes der Benutzerschnittstel le.

Die vorschlagsgemäße Lösung lässt sich auf einen weiten Bereich landwirtschaftlicher Arbeitsmaschinen 1 anwenden. Dazu gehören Traktoren, insbesondere mit angebauten Arbeitsaggregaten wie Pflügen, Düngerstreuern, Sämaschinen, Spritzeinrichtungen, Wendern, Mähwerken oder dergleichen, sowie selbstfahrende Erntemaschinen wie Mähdrescher, Feldhäcksler oder dergleichen mit daran angeordneten Vorsatzgeräten. Bei dem dargestellten und insoweit bevorzugten Ausführungsbeispiel handelt es sich bei der landwirtschaftlichen Arbeitsmaschine 1 um einen Traktor, der in an sich üblicher Weise mit einem vorderen und/oder hinteren Anbaugerät (nicht dargestellt), beispielsweise einem Pflug, ausgestattet sein kann. Alle Ausführungen zu einem Traktor gelten für alle anderen Arten von landwirtschaftlichen Arbeitsmaschinen 1 entsprechend.

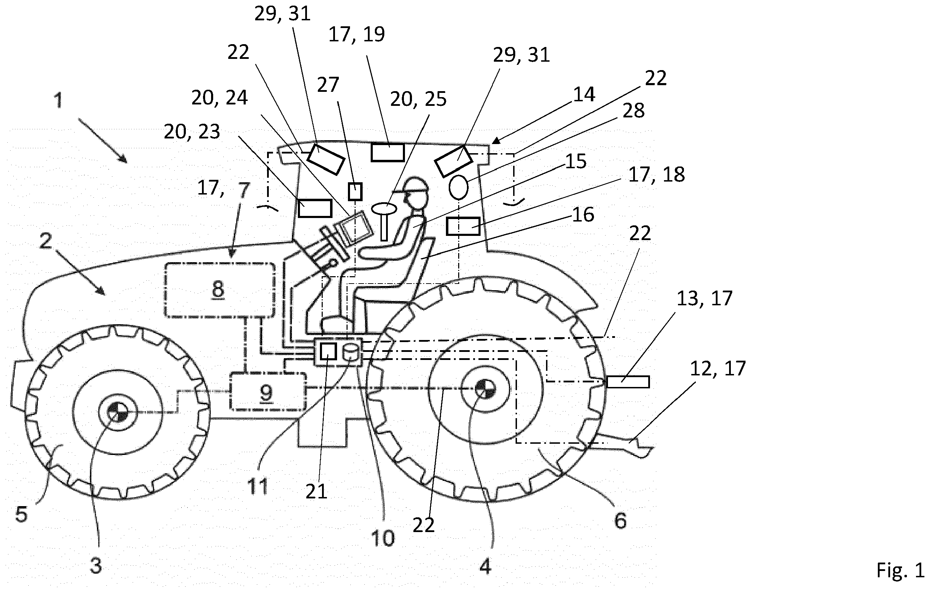

Fig. 1 zeigt exemplarisch eine schematische Darstellung der landwirtschaftlichen Arbeitsmaschine 1, die mit einem Fahrantrieb 2 ausgestattet ist, der zumindest eine, im dargestellten Ausführungsbeispiel zwei, Antriebsachsen 3, 4, mit Antriebsrädern 5, 6 aufweist. Der Fahrantrieb 2 wird von einer Antriebseinheit 7 angetrieben, die mindestens einen Antriebsmotor 8 umfasst. Das von der Antriebseinheit 7 bzw. dem Antriebsmotor 8 während des Betriebs erzeugte Drehmoment wird über ein Lastschaltgetriebe 9, das ein Schalten einzelner Gänge unter Last und ohne Unterbrechung der Vortriebkraft erlaubt, zum Fahrantrieb 2 übertragen. Der Fahrantrieb 2, die Antriebseinheit 7 dient darüber hinaus dem Antreiben zumindest eines hydraulischen Hubwerkes 12 sowie zumindest einer Nebenabtriebswelle 13. Die Antriebseinheit 7, der Antriebsmotor 8, das Lastschaltgetriebe 9, das Hubwerk 12 sowie die Nebenabtriebswelle 13 sind Arbeitsorgane und fester Bestandteil der Arbeitsmaschine 1 und stellen zu steuernde und/oder zu regelnde Vorrichtungen 17 der Arbeitsmaschine 1 dar. Eine zu steuernde und/oder zu regelnde Vorrichtung 17 kann weiterhin ein an die landwirtschaftliche Arbeitsmaschine 1 adaptiertes Anbaugerät oder Arbeitsgerät wie ein Bodenbearbeitungsgerät, eine Spritze, ein Düngerstreuer und dergleichen sein. Das adaptierte Anbaugerät oder Arbeitsgerät kann beispielsweise vom Hubwerk 12 aufgenommen und von der Nebenabtriebswelle 13 angetrieben werden. Das Anbaugerät oder Arbeitsgerät kann beispielsweise durch ein Bussystem 22 wie dem ISO-Bus mit einer Steuervorrichtung 10 der Arbeitsmaschine 1 verbunden sein.

Die Arbeitsmaschine 1 weist eine Kabine 14 auf, in der sich eine Bedienperson 15 auf einem Fahrersitz 16 befindet. Die Kabine 14 ist mit zumindest einem Komfortgerät ausgeführt, welches als ein Multimediagerät 18 zur auditiven oder audiovisuellen Wiedergabe, eine Freisprecheinrichtung oder ein Klimagerät 19 ausgeführt sein kann. Ein solches Komfortgerät stellt gleichfalls eine zu steuernde und/oder zu regelnde Vorrichtung 17 im erfindungsgemäßen Sinn dar. Weiterhin ist in der Kabine 14 zumindest eine Benutzerschnittstelle 20 angeordnet. Die zumindest eine Benutzerschnittstelle 20 sowie die zumindest eine zu steuernde und/oder zu regelnde Vorrichtung 17 sind mit der Steuervorrichtung 10 durch das Bussystem 22 signaltechnisch verbunden. Die Steuervorrichtung 10 umfasst einen Speicher 11 sowie eine Recheneinheit 21.

Die zumindest eine Benutzerschnittstelle 20 ist im dargestellten Ausführungsbeispiel als Terminal 23, als Anzeigevorrichtung 24 sowie als ein Multifunktionsgriff 25 ausgeführt. Die zumindest eine Benutzerschnittstelle 20 kann des Weiteren beispielsweise als mobiles Datenverarbeitungsgerät oder als Straßenfahrschalter ausgeführt sein. Eine Benutzerschnittstelle 20 ist als eine mit zumindest einem Bedienelement 26 ausgeführte Vorrichtung zu verstehen, die mit der Steuervorrichtung 10 signaltechnisch verbunden ist und der Eingabe und/oder Ausgabe dient.

In der Kabine 14 sind zumindest ein Mikrofon 27 zur Aufnahme von durch die Bedienperson 15 artikulierten Sprachbefehlen sowie zumindest ein Lautsprecher 28 angeordnet. Das zumindest eine Mikrofon 27 und der zumindest eine Lautsprecher 28 sind Bestandteil eines Sprachsteuerungssystem 30, welches in der Steuervorrichtung 10 hinterlegt ist. Durch das Sprachsteuerungssystem 30 ist die Steuervorrichtung 10 zum Empfang und zur Auswertung von Sprachbefehlen der Bedienperson 15 der Arbeitsmaschine 1 eingerichtet. In der Kabine 14 ist zumindest eine Sensoreinrichtung 29 angeordnet, die als eine optische Vorrichtung 31 zur Bilderfassung ausgeführt ist. Die optische Vorrichtung 31 steht durch das Bussystem 22 mit der Steuervorrichtung 10 in Verbindung. Die Steuervorrichtung 10 umfasst ein Bildverarbeitungssystem 32, das zur Verarbeitung der von der optischen Vorrichtung 31 bereitgestellten Signale eingerichtet ist.

Mittels der wenigstens einen Benutzerschnittstelle 20 werden Steuerbefehle zur Ansteuerung der zumindest einen Vorrichtung 17 an die Steuervorrichtung 10 übertragen. Die wenigstens eine Benutzerschnittstelle 20 ist dazu eingerichtet, dem zumindest einen Bedienelement 26 eine Belegung mit zumindest einer Steuerbefehle umfassenden Funktion zuzuweisen.

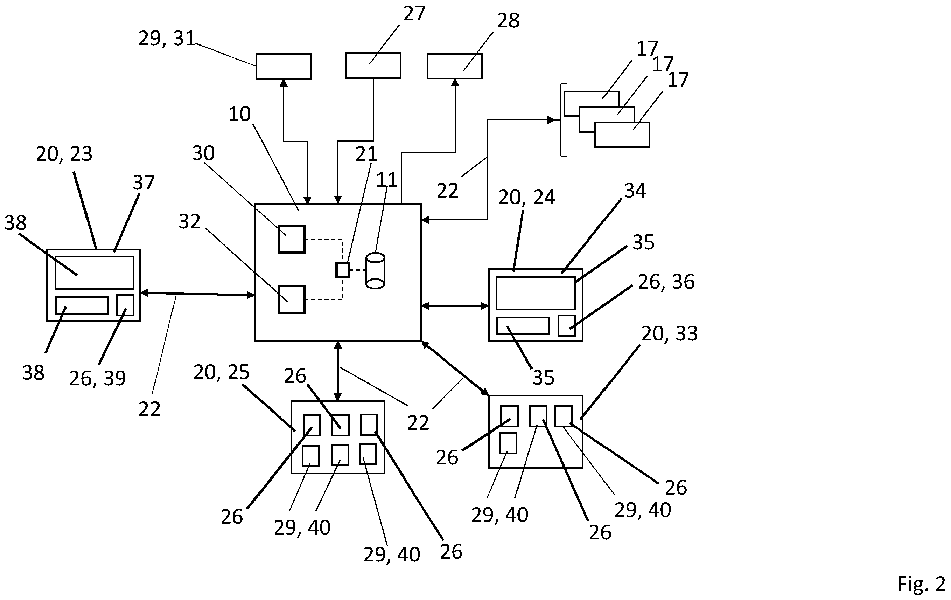

In Fig. 2 ist exemplarisch eine schematische Darstellung der Steuervorrichtung 10 und der mit dieser durch das Bussystem 22 verbundenen Benutzerschnittstellen 20 gezeigt. Neben dem Terminal 23, der Anzeigevorrichtung 24 sowie dem Multifunktionsgriff 25 kann ein Bedienpanel 33 vorgesehen sein, welches beispielsweise in eine Armlehne des Fahrersitzes 16 integriert sein kann. Das Terminal 23, die Anzeigevorrichtung 24, der Multifunktionsgriff 25 sowie das Bedienpanel 33 weisen ein oder mehrere Bedienelemente 26 auf.

Der Begriff Bedienelement 26 ist weit gefasst zu verstehen und umfasst jedwede Einrichtung an der wenigstens einen Benutzerschnittstelle 20, die durch eine physische Betätigung zur Ausführung einer Funktion und/oder eines Funktionssets eingerichtet ist, wodurch die zu steuernde und/oder zu regelnde Vorrichtung 17 ansteuerbar ist. Eine physische Betätigung umfasst beispielsweise das Drücken, Drehen, Berühren, Ausführen von Wischbewegungen, Schwenken und/oder Kippen des Bedienelement 26. Die Betätigung des Bedienelementes 26 kann entsprechend seiner Ausgestaltung abgestuft oder stufenlos erfolgen. Darüber hinaus kann das Bedienelement 26 eine Visualisierungsvorrichtung umfassen, beispielsweise eine Anzeige und/oder ein oder mehrere Leuchtmittel.

Die als Anzeigevorrichtung 24 ausgebildete Benutzerschnittstelle 20 kann einen berührungssensitiven Bildschirm 34 mit zumindest einem Visualisierungsbereich 35 zur Anzeige von verschiedenen Betriebsparametern der Arbeitsmaschine 1 sowie zumindest einem virtuellen Bedienelement 36. Die als Terminal 23 ausgebildete Benutzerschnittstelle 20 kann einen Bildschirm 37 mit zumindest einem Visualisierungsbereich 38 zur Anzeige von verschiedenen Betriebsparametern der Arbeitsmaschine 1 und/oder eines Anbaugerätes bzw. Arbeitsgerätes sowie zumindest ein beispielsweise als Tast- oder Folienschalter 39 ausgeführtes Bedienelement 26 aufweisen.

Erfindungsgemäß ist die mindestens eine Steuervorrichtung 10 dazu eingerichtet, das zumindest eine Bedienelement 26 der wenigstens einen Benutzerschnittstelle 20 sprachgesteuert mit zumindest einer Funktion und/oder zumindest einem Funktionsset zu belegen. Zur Bestimmung des zu belegenden Bedienelementes 26 ist zumindest eine Sensoreinrichtung 29 vorgesehen, die dazu eingerichtet ist, das zu belegende Bedienelement 26 durch eine Gestenerkennung und/oder eine Detektion der Blickrichtung der Bedienperson 15 zu bestimmen. So kann hierzu die zumindest eine Sensoreinrichtung 29 zur Detektion einer Annäherung an das zumindest eine Bedienelement 26 ausgeführt sein. Die Anordnung der zumindest einen Sensoreinrichtung 29 ist bevorzugt in unmittelbarer Nähe zu dem jeweiligen Bedienelement 26 oder an dem Bedienelement 26 vorgesehen. Dazu kann die zumindest eine Sensoreinrichtung 29 als ein Näherungsschalter 40 ausgeführt sein. Dies ermöglicht eine berührungslose Gestenerkennung, d.h. ein unmittelbarer Kontakt mit dem Bedienelement 26 durch die Bedienperson 15 ist nicht erforderlich. Insbesondere kann die zumindest eine Sensoreinrichtung 29 als kapazitiver, optischer Näherungsschalter und/oder als Ultraschall-Näherungsschalter ausgeführt sein. Die Anordnung von Näherungsschaltern 40 ist beispielhaft an der als Multifunktionsgriff 25 ausgeführten Benutzerschnittstelle 20 dargestellt.

Weiter bevorzugt kann vorgesehen sein, dass die zumindest eine Sensoreinrichtung 29 zur Detektion der Berührung oder Betätigung des zumindest einen Bedienelementes 26 eingerichtet ist. Hierzu kann die zumindest eine Sensoreinrichtung 29 beispielsweise als kapazitiver Sensor ausgeführt sein, insbesondere als Drucksensor. Im Fall des als berührungssensitiver Bildschirm 34 bzw. Touchscreen ausgeführten Benutzerschnittstelle 20, 24 bildet dieser, in Abhängigkeit von dem zugrunde liegenden Funktionsprinzip zur Umsetzung der Berührungsempfindlichkeit des berührungssensitiven Bildschirm 34, die zumindest eine Sensoreinrichtung 29. Im Fall des Bedienpanels 33 als Benutzerschnittstelle 20 können statt der Näherungsschalter 40 die beispielsweise als Kippschalter ausgeführten Bedienelemente 26 selbst die zumindest eine Sensoreinrichtung 29 ausbilden, indem eine Änderung der Schaltstellung durch die Betätigung durch die Bedienperson 15 detektiert wird.

Mittels der zumindest einen als optische Vorrichtung 31 ausgeführten Sensoreinrichtung 29 lässt sich eine Blickrichtung und/oder eine Kopfposition und/oder eine Hand- oder Fingerposition der Bedienperson 15 bestimmen. Die Kopfposition und/oder die Hand- oder Fingerposition lassen sich als Zeigerichtung interpretieren, mit dem das zu belegende Bedienelement 26 ausgewählt werden soll. Entsprechendes gilt für die Blickrichtung, deren Auswertung auf die Auswahl des zu belegenden Bedienelementes 26 schließen lässt. Hierzu verarbeitet das Bildverarbeitungssystem 32 die von der zumindest einen optischen Vorrichtung 31 bereitgestellten Daten. Die optische Vorrichtung 31 kann als Kamera, Infrarotkamera oder dergleichen ausgeführt sein.

Für eine verbesserte Zuordnung von durch das Bildverarbeitungssystem 32 bestimmter Blickrichtung und/oder Zeigerichtung zu dem zu belegenden Bedienelement 26 kann im Speicher 11 der Steuervorrichtung 10 ein virtuelles Abbild des Inneren der Kabine 14 hinterlegt sein, insbesondere der Position und Anordnung der Benutzerschnittstellen 20 und des zugehörigen zumindest einen Bedienelementes 26. Durch Abgleich der von der optischen Vorrichtung 31 erfassten Bilddaten, welche die Blickrichtung und/oder die Zeigerichtung der Bedienperson 15 wiedergeben, mit der im Speicher 11 hinterlegten virtuellen Umgebung des Inneren der Kabine 14 lässt sich die Zuordnung der Blick- und/oder Zeigerichtung zu dem von der Steuervorrichtung 10 auszuwählenden Bedienelement 26 präzisieren. Weiterhin lässt sich mittels der optischen Vorrichtung 31 eine Aktualisierung der hinterlegten virtuellen Umgebung durchführen, wenn beispielsweise ein mobiles Datenverarbeitungsgerät als eine neue Benutzerschnittstelle 20 temporär in der Kabine 14 angeordnet und mit der Steuervorrichtung 10 signaltechnisch verbunden wird.

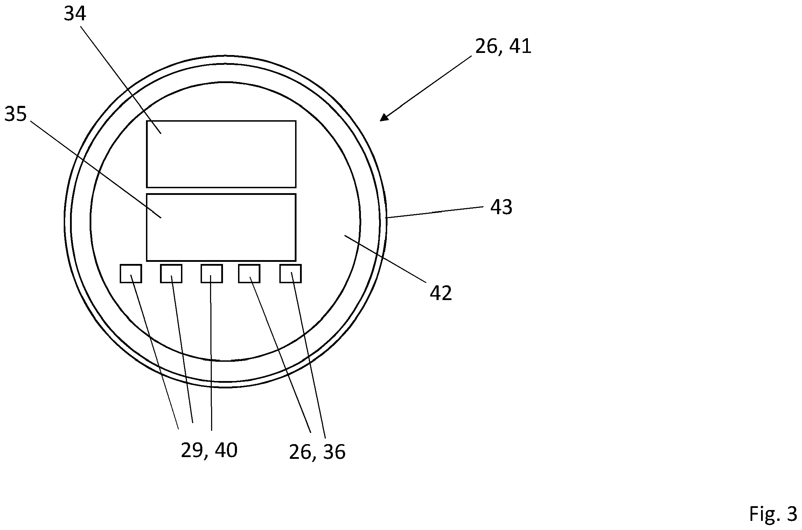

Beispielhaft kann ein Bedienelement 26, welches zusätzlich eine Visualisierungsvorrichtung umfasst, als Drehdrückbedienelement 41 mit einem berührungssensitiven Bildschirm 42 ausgeführt sein, wie in Fig. 3 exemplarisch dargestellt. Dabei bildet das Drehdrückbedienelement 41 zugleich die Benutzerschnittstelle 20 und das Bedienelement 26. Zum Einstellen oder Verstellen von auf dem Bildschirm 42 Werten ist ein Drehring 43 vorgesehen, der im als auch gegen den Uhrzeigersinn drehbar ist. Zudem kann zumindest der Drehring 43 in axialer Richtung relativ zum Bildschirm 42 oder gemeinsam mit diesem bewegt werden. Dem Drehdrückbedienelement 41 kann ein festes Funktionsset zugewiesen sein, welches der Fahrer per Sprachbefehl aufrufen kann. Beispielsweise kann der Sprachbefehl "Radio" dazu führen, dass das als Radio ausgeführte Komfortgerät 17 über die Benutzerschnittstelle 20 respektive das Drehdrückbedienelement 41 angesteuert wird, wobei auf dem Drehring 43 die Lautstärke ein- bzw. verstellt und auf dem Bildschirm 42 durch eine Wischbewegung Radiosender durchgeschaltet werden können. Die Interpretation des Sprachbefehls durch das Sprachsteuerungssystem 30 kann zur Bestätigung mittels der Lautsprecher 28 akustisch wiedergegeben werden.

Um ein Bedienelement 26 auszuwählen, welches mittels Sprachbefehl der Bedienperson 15 mit einer Funktion und/oder einem Funktionsset belegt werden soll, wird die von der Bedienperson 15 ausgeführte Geste, welche zum Beispiel ein Zeigen oder Annähern an das zu belegende Bedienelement 26 sein kann, erfasst und ausgewertet. Insbesondere kann die Bestimmung des zu belegenden Bedienelementes 26 durch die Steuervorrichtung 10 vor oder während einer Eingabe des Sprachbefehls erfolgen. Hierzu kann der von der Bedienperson 15 eingegebene Sprachbefehl für die Dauer der Bestimmung des zu belegenden Bedienelementes 26 im Speicher 11 zwischengespeichert werden.

**Bezugszeichenliste**

| | | | |
|---|---|---|---|
| 1 | Arbeitsmaschine | 31 | Optische Vorrichtung |
| 2 | Fahrantrieb | 32 | Bildverarbeitungssystem |
| 3 | Antriebsachse | 33 | Bedienpanel |
| 4 | Antriebsachse | 34 | Bildschirm |
| 5 | Antriebsrad | 35 | Visualisierungsbereich |
| 6 | Antriebsrad | 36 | Virtuelles Bedienelement |
| 7 | Antriebseinheit | 37 | Bildschirm |
| 8 | Antriebsmotor | 38 | Visualisierungsbereich |
| 9 | Lastschaltgetriebe | 39 | Folienschalter |
| 10 | Steuervorrichtung | 40 | Näherungsschalter |
| 11 | Speicher | 41 | Drehdrückbedienelement |
| 12 | Hubwerk | 42 | Bildschirm |
| 13 | Nebenabtrieb | 43 | Drehring |
| 14 | Kabine | | |
| 15 | Bedienperson | | |
| 16 | Fahrersitz | | |
| 17 | Vorrichtung | | |
| 18 | Multimediagerät | | |
| 19 | Klimagerät | | |
| 20 | Benutzerschnittstelle | | |
| 21 | Recheneinheit | | |
| 22 | Bussystem | | |
| 23 | Terminal | | |
| 24 | Anzeigevorrichtung | | |
| 25 | Multifunktionsgriff | | |
| 26 | Bedienelement | | |
| 27 | Mikrofon | | |
| 28 | Lautsprecher | | |
| 29 | Sensoreinrichtung | | |
| 30 | Sprachsteuerungssystem | | |

## Patentansprüche

1. Landwirtschaftliche Arbeitsmaschine (1) mit zumindest einer zu steuernden und/oder zu regelnden Vorrichtung (17), umfassend mindestens eine Steuervorrichtung (10) zur Ansteuerung der zumindest einen Vorrichtung (17) sowie wenigstens eine zumindest ein Bedienelement (26) aufweisende, mit der Steuervorrichtung (10) signaltechnisch verbundene Benutzerschnittstelle (20), mittels der Steuerbefehle zur Ansteuerung der zumindest einen Vorrichtung (17) an die Steuervorrichtung (10) übertragbar sind, wobei die wenigstens eine Benutzerschnittstelle (20) dazu eingerichtet ist, dem zumindest einen Bedienelement (16) eine Belegung mit zumindest einer Steuerbefehle umfassenden Funktion zuzuweisen, und dass die Steuervorrichtung (10) durch ein Sprachsteuerungssystem (30) zum Empfang und zur Auswertung von Sprachbefehlen einer Bedienperson (15) der Arbeitsmaschine (1) eingerichtet ist, **dadurch gekennzeichnet, dass** die mindestens eine Steuervorrichtung (10) dazu eingerichtet ist, das zumindest eine Bedienelement (26) der wenigstens einen Benutzerschnittstelle (20) sprachgesteuert mit zumindest einer Funktion und/oder zumindest einem Funktionsset zu belegen, wobei zur Bestimmung des zu belegenden Bedienelementes (26) zumindest eine Sensoreinrichtung (29) vorgesehen ist, die dazu eingerichtet ist, das zu belegende Bedienelement (26) durch eine Gestenerkennung und/oder eine Detektion der Blickrichtung der Bedienperson (15) zu bestimmen.

2. Arbeitsmaschine (1) nach Anspruch 1, **dadurch gekennzeichnet, dass** die zumindest eine Sensoreinrichtung (29) zur Detektion einer Annäherung an das zumindest eine Bedienelement (26) ausgeführt ist.

3. Arbeitsmaschine (1) nach Anspruch 1 oder 2, **dadurch gekennzeichnet, dass** die zumindest eine Sensoreinrichtung (29) zur Detektion der Berührung oder Betätigung des zumindest einen Bedienelementes (26) eingerichtet ist.

4. Arbeitsmaschine (1) nach einem der Ansprüche 1 bis 3, **dadurch gekennzeichnet, dass** die zumindest eine Sensoreinrichtung (29) als eine optische Vorrichtung (31) zur Bilderfassung ausgeführt ist.

5. Arbeitsmaschine (1) nach Anspruch 4, **dadurch gekennzeichnet, dass** die Steuervorrichtung (10) ein Bildverarbeitungssystem (32) aufweist, das zur Verarbeitung der von der optischen Vorrichtung (31) zur Bilderfassung bereitgestellten Signale eingerichtet ist.

6. Arbeitsmaschine (1) nach Anspruch 4 oder 5, **dadurch gekennzeichnet, dass** die optische Vorrichtung (31) zur Erfassung einer Blickrichtung und/oder einer Zeigerichtung der in einer Kabine (14) der Arbeitsmaschine (1) befindlichen Bedienperson (15) eingerichtet ist.

7. Arbeitsmaschine (1) nach Anspruch 6, **dadurch gekennzeichnet, dass** im Speicher (11) der Steuervorrichtung (10) ein virtuelles Abbild des Inneren der Kabine (14) hinterlegt ist, insbesondere der Position und Anordnung des zumindest einen Bedienelementes (26).

8. Arbeitsmaschine (1) nach einem der vorangehenden Ansprüche, **dadurch gekennzeichnet, dass** die zumindest eine zu steuernde und/oder zu regelnde Vorrichtung (17) der Arbeitsmaschine (1) ein Komfortgerät, ein Datenverarbeitungsgerät oder ein an die Arbeitsmaschine (1) adaptiertes Anbaugerät oder Arbeitsgerät sowie ein Arbeitsorgan ist.

9. Arbeitsmaschine (1) nach einem der vorangehenden Ansprüche, **dadurch gekennzeichnet, dass** die zumindest eine Funktion und/oder das zumindest eine Funktionsset, mit dem das zumindest eine Bedienelement (26) belegt ist, unabhängig von einer unmittelbaren Betätigung des Bedienelementes (26) durch ein äußeres Ereignis triggerbar ist.

10. Arbeitsmaschine (1) nach einem der vorangehenden Ansprüche, **dadurch gekennzeichnet, dass** die wenigstens eine Benutzerschnittstelle (20) zur Anzeige der zumindest einen Funktion und/oder des zumindest einen Funktionssets, mit dem das zumindest eine Bedienelement (26) belegt ist, eingerichtet ist.

11. Arbeitsmaschine (1) nach einem der vorangehenden Ansprüche, **dadurch gekennzeichnet, dass** die Benutzerschnittstelle (20) dazu eingerichtet ist, bei sprachgesteuerter Anforderung der Ausführung einer sicherheitskritischen Funktion den Empfang der sprachgesteuerten Anforderung zu bestätigen, die sprachgesteuerte Anforderung wiederzugeben und die Ausführung der sicherheitskritischen Funktion innerhalb eines definierten Zeitfensters durch Betätigung des Bedienelementes (26) zuzulassen.

12. Arbeitsmaschine (1) nach einem der vorangehenden Ansprüche, **dadurch gekennzeichnet**, zur Belegung eines spezifischen Bedienelementes (26) mit zumindest einer Funktion und/oder zumindest einem Funktionsset, dem jeweiligen Bedienelement (26) ein spezifischer Aktivierungssprachbefehl zugeordnet ist.

13. Arbeitsmaschine (1) nach Anspruch 12, **dadurch gekennzeichnet, dass** der jeweilige spezifische Aktivierungssprachbefehl in der Steuervorrichtung (10) hinterlegt oder mittels eines Sprachbefehls durch die Bedienperson (15) vorgebbar ist.

14. Arbeitsmaschine (1) nach einem der vorangehenden Ansprüche, **dadurch gekennzeichnet, dass** die wenigstens eine Benutzerschnittstelle (20) zur Anzeige des Ergebnisses der Ausführung der durch die Betätigung des zumindest einen Bedienelements (26) ausgeführten Funktion oder des Funktionssets eingerichtet ist.

15. Arbeitsmaschine (1) nach einem der vorangehenden Ansprüche, **dadurch gekennzeichnet, dass** das zumindest eine Bedienelement (26) dazu eingerichtet ist, eine sensorische Rückmeldung als Reaktion auf einen Sprachbefehl zu generieren.

## Claims

1. An agricultural working machine (1) with at least one device (17) to be controlled and/or regulated, comprising at least one control device (10) for controlling the at least one device (17) as well as at least one user interface (20) which is connected to the control device (10) for the purposes of signalling and has an operating element (26), by means of which control commands for controlling the at least one device (17) can be transferred to the control device (10), wherein the at least one user interface (20) is configured to allocate an assignment with at least one function comprising control commands to the at least one operating element (16), and in that the control device (10) is configured to receive and evaluate voice commands from an operative (15) of the working machine (1) by means of a voice control system (30), **characterized in that** the at least one control device (10) is configured to allocate at least one function and/or at least one set of functions to the at least one operating element (26) of the at least one user interface (20) by voice control, wherein, in order to determine the operating element (26) to be allocated, at least one sensor means (29) is provided which is configured to determine the operating element (26) to be allocated by gesture recognition and/or detection of the viewing direction of the operative (15).

2. The working machine (1) according to claim 1, **characterized in that** the at least one sensor means (29) is configured to detect an approach to the at least one operating element (26).

3. The working machine (1) according to claim 1 or claim 2, **characterized in that** the at least one sensor means (29) is configured to detect touching and/or actuation of the at least one operating element (26).

4. The working machine (1) according to one of claims 1 to 3, **characterized in that** the at least one sensor means (29) is configured as an optical device (31) for image acquisition.

5. The working machine (1) according to claim 4, **characterized in that** the control device (10) has an image processing system (32) which is configured to process the signals provided by the optical device (31) for image acquisition.

6. The working machine (1) according to claim 4 or claim 5, **characterized in that** the optical device (31) is configured to detect a viewing direction and/or an indicating direction of the operative (15) located in a cab (14) of the working machine (1).

7. The working machine (1) according to claim 6, **characterized in that** a virtual representation of the interior of the cab (14) is stored in the memory (11) of the control device (10), in particular the position and arrangement of the at least one operating element (26).

8. The working machine (1) according to one of the preceding claims, **characterized in that** the at least one device (17) of the working machine (1) to be controlled and/or regulated is an amenity unit, a data processing unit or an attachment or implement or a working unit adapted to the working machine (1).

9. The working machine (1) according to one of the preceding claims, **characterized in that** the at least one function and/or the at least one set of functions allocated to the at least one operating element (26) can be triggered independently of a direct actuation of the operating element (26) by an external event.

10. The working machine (1) according to one of the preceding claims, **characterized in that** the at least one user interface (20) is configured to display the at least one function and/or the at least one set of functions allocated to the at least one operating element (26).

11. The working machine (1) according to one of the preceding claims, **characterized in that**, in the event of a voice-controlled request to carry out a function which is critical to safety, the user interface (20) is configured to confirm the receipt of the voice-controlled request, to play back the voice-controlled request, and to permit the function which is critical to safety to be carried out within a defined time slot by actuating the operating element (26).

12. The working machine (1) according to one of the preceding claims, **characterized in that** in order to allocate at least one function and/or at least one set of functions to a specific operating element (26), a specific activation voice command is associated with the respective operating element (26).

13. The working machine (1) according to claim 12, **characterized in that** the respective specific activation voice command is stored in the control device (10) or can be specified by the operative (15) by means of a voice command.

14. The working machine (1) according to one of the preceding claims, **characterized in that** the at least one user interface (20) is configured to display the result of carrying out the function or the set of functions carried out by actuating the at least one operating element (26).

15. The working machine (1) according to one of the preceding claims, **characterized in that** the at least one operating element (26) is configured to generate sensory feedback as a reaction to a voice command.

## Revendications

1. Machine de travail agricole (1) comprenant au moins un dispositif à commander et/ou à réguler (17), incluant au moins un dispositif de commande (10) pour commander le au moins un dispositif (17) ainsi qu'au moins une interface utilisateur (20) qui comporte au moins un élément d'utilisation (26) et est reliée en termes de technique de signaux au dispositif de commande (10) et au moyen de laquelle des instructions de commande sont transmissibles au dispositif de commande (10) pour commander le au moins un dispositif (17), la au moins une interface utilisateur (20) étant agencée pour affecter au au moins un élément d'utilisation (16) une occupation avec au moins une fonction incluant des instructions de commande, et en ce que le dispositif de commande (10) est agencé par l'intermédiaire d'un système de commande vocale (30) pour recevoir et pour analyser des instructions vocales d'une personne utilisatrice (15) de la machine de travail (1), **caractérisée en ce que** le au moins un dispositif de commande (10) est agencé pour occuper par commande vocale le au moins un élément d'utilisation (26) de la au moins une interface utilisateur (20) avec au moins une fonction et/ou avec au moins un ensemble de fonctions, pour déterminer l'élément d'utilisation (26) à occuper étant prévu au moins un équipement de capteur (29) qui est agencé pour déterminer l'élément d'utilisation (26) à occuper par l'intermédiaire d'une reconnaissance gestuelle et/ou d'une détection de la direction de regard de la personne utilisatrice (15).

2. Machine de travail (1) selon la revendication 1, **caractérisée en ce que** le au moins un équipement de capteur (29) est conçu pour détecter une approche du au moins un élément d'utilisation (26) .

3. Machine de travail (1) selon la revendication 1 ou 2, **caractérisée en ce que** le au moins un équipement de capteur (29) est agencé pour détecter le contact avec ou l'actionnement du au moins un élément d'utilisation (26).

4. Machine de travail (1) selon une des revendications 1 à 3, **caractérisée en ce que** le au moins un équipement de capteur (29) est conformé en dispositif optique (31) pour la capture d'images.

5. Machine de travail (1) selon la revendication 4, **caractérisée en ce que** le dispositif de commande (10) comporte un système de traitement d'images (32) qui est agencé pour traiter les signaux fournis par le dispositif optique (31) pour la capture d'images.

6. Machine de travail (1) selon la revendication 4 ou 5, **caractérisée en ce que** le dispositif optique (31) est agencé pour détecter une direction de regard et/ou une direction de signe de la personne utilisatrice (15) se trouvant dans la cabine (14) de la machine de travail (1).

7. Machine de travail (1) selon la revendication 6, **caractérisée en ce que** dans la mémoire (11) du dispositif de commande (10) est enregistrée une représentation virtuelle de l'intérieur de la cabine (14), en particulier de la position et de l'agencement du au moins un élément d'utilisation (26) .

8. Machine de travail (1) selon une des revendications précédentes, **caractérisée en ce que** le au moins un dispositif à commander et/ou à réguler (17) de la machine de travail (1) est un appareil de confort, un appareil de traitement de données ou un outil rapporté ou un outil de travail adapté sur la machine de travail (1) ainsi qu'un organe de travail.

9. Machine de travail (1) selon une des revendications précédentes, **caractérisée en ce que** la au moins une fonction et/ou le au moins un ensemble de fonctions avec lequel le au moins un élément d'utilisation (26) est occupé est déclenchable par l'intermédiaire d'un événement extérieur indépendamment d'un actionnement direct de l'élément d'utilisation (26).

10. Machine de travail (1) selon une des revendications précédentes, **caractérisée en ce que** la au moins une interface utilisateur (20) est agencée pour afficher la au moins une fonction et/ou le au moins un ensemble de fonctions avec lequel le au moins un élément d'utilisation (26) est occupé.

11. Machine de travail (1) selon une des revendications précédentes, **caractérisée en ce que** l'interface utilisateur (20) est agencée, en cas de demande par commande vocale d'exécuter une fonction critique pour la sécurité, pour confirmer la réception de la demande par commande vocale, pour restituer la demande par commande vocale et pour autoriser, par l'intermédiaire d'un actionnement de l'élément d'utilisation (26), l'exécution de la fonction critique pour la sécurité à l'intérieur d'une fenêtre temporelle définie.

12. Machine de travail (1) selon une des revendications précédentes, **caractérisée en ce que**, pour occuper un élément d'utilisation (26) spécifique avec au moins une fonction et/ou avec au moins un ensemble de fonctions, une instruction vocale d'activation spécifique est associée à l'élément d'utilisation (26) respectif.

13. Machine de travail (1) selon la revendication 12, **caractérisée en ce que** l'instruction vocale d'activation spécifique est enregistrée dans le dispositif de commande (10) ou prescriptible par la personne utilisatrice (15) au moyen d'une instruction vocale.

14. Machine de travail (1) selon une des revendications précédentes, **caractérisée en ce que** la au moins une interface utilisateur (20) est agencée pour afficher le résultat de l'exécution de la fonction ou de l'ensemble de fonctions exécutées par l'intermédiaire de l'actionnement du au moins un élément d'utilisation (26).

15. Machine de travail (1) selon une des revendications précédentes, **caractérisée en ce que** le au moins un élément d'utilisation (26) est agencé pour générer une rétroaction par capteur comme réaction à une instruction vocale.
